# EUROPÄISCHE PATENTSCHRIFT

(11) **EP 2 570 291 B1**
(45) Veröffentlichungstag und Bekanntmachung des Hinweises auf die Patenterteilung: **25.06.2014**
(21) Anmeldenummer: 11181612.0
(22) Anmeldetag: 16.09.2011
(51) Int. Cl.: B60L 3/00

(54) **Antriebssystem eines batteriebetriebenen Fahrzeugs mit einer stromrichtergespeisten permanent erregten Synchronmaschine**
Drive system of a battery-operated vehicle with a frequency converter fed permanently excited synchronous machine
Système d'entraînement d'un véhicule fonctionnant sur batterie doté d'une machine synchrone à excitation permanente alimentée par convertisseur

(43) Veröffentlichungstag der Anmeldung: 20.03.2013
(73) Patentinhaber: Siemens Aktiengesellschaft, 80333 München (DE)
(72) Erfinder: Walders, Hanno, 91056 Erlangen (DE); Schwesig, Günter, 91054 Erlangen (DE)

(56) Entgegenhaltungen:
- EP-A1- 2 338 752
- DE-A1-102008 045 247
- US-B1- 6 975 085

## Beschreibung

Die Erfindung bezieht sich auf ein Antriebssystem eines batteriebetriebenen Fahrzeugs.

Aus der DE 10 2009 044 281 A1 ist ein Antriebssystem eines batteriebetriebenen Fahrzeugs bekannt und in FIG 1 näher dargestellt. In diesem Blockschaltbild eines mit 2 bezeichneten bekannten Antriebssystems sind mit 4 ein Energiespeicher, mit 6 ein bidirektionaler Gleichspannungs-Wandler, mit 8 ein selbstgeführter Stromrichter, der auch Pulsstromrichter bezeichnet wird, mit 10 eine Antriebsmaschine, insbesondere eine permanent erregte Synchronmaschine, und mit 12 ein Antriebsrad bzw. eine Antriebsachse des batteriebetriebenen Fahrzeugs bezeichnet. Der bidirektionale Gleichspannungswandler 6, mit dem die Spannung des Energiespeichers 4, der beispielsweise ein Akkumulator ist, in eine Gleichspannung des Pulsstromrichters 8 gewandelt wird, weist dazu zwei elektrisch in Reihe geschaltete abschaltbare Halbleiter T8 und T10, insbesondere **I**nsulated-**G**ate-**B**ipolar-**T**ransistoren (IGBT) auf, deren Verbindungspunkt 14 mittels einer Drossel 16 mit einem Plus-Anschluss des Energiespeichers 4 elektrisch leitend verbunden ist. Ausgangsseitig weist dieser bipolare Gleichspannungs-Wandler 6 einen Pufferkondensator 18 auf, mit dem deren Ausgangsspannung geglättet und gepuffert wird. Zur Verbindung der beiden Ausgangs-Anschlüsse des bidirektionalen Gleichspannungs-Wandlers 6 mit korrespondierenden gleichspannungsseitigen Anschlüssen DC+, DC- des selbstgeführten Stromrichters 8 sind zwei Stromschienen 20 und 22 vorgesehen. Die Stromschiene 20 wird auch als positive Gleichspannungsschiene, die Stromschiene 22 als negative Gleichspannungsschiene bezeichnet. Damit diese Verbindung möglichst niederinduktiv ist, sind diese beiden Stromschienen 20 und 22 mit einem möglichst geringen Abstand zueinander verlegt. Der selbstgeführter Stromrichter 8 ist dreiphasig ausgeführt, da als Antriebsmaschine 10 eine dreiphasige permanent erregte Synchronmaschine vorgesehen ist. Dieser selbstgeführte Stromrichter 8 weist drei Halbbrücken auf, die elektrisch parallel zu den gleichspannungseitigen Anschlüssen DC+ und DC- dieses selbstgeführten Stromrichters 8 geschaltet sind und die jeweils zwei in Reihe geschaltete abschaltbare Leistungshalbleiter T1, T2 bzw. T3, T4 bzw. T5, T6 aufweisen. Als abschaltbare Leistungshalbleiter T1, ..., T6 sind IGBTs vorgesehen, weshalb dieser selbstgeführte Stromrichter 8 auch als IGBT-Pulsstromrichter bezeichnet wird. Jeweils ein Verbindungspunkt zweier abschaltbarer Leistungshalbleiter T1, T2 bzw. T3, T4 bzw. T5, T6 bilden einen wechselspannungsseitigen Anschluss R bzw. S bzw. T des selbstgeführten Stromrichters 8. Die Antriebsmaschine 10 weist drei Ständerwicklungen Lₐ, L_{b} und L_{c} auf, die elektrisch in Stern geschaltet sind und deren freien Enden jeweils einen ständerseitigen Anschluss U, V, W bilden. Jeder wechselspannungsseitige Anschluss R, S und T des IGBT-Pulsstromrichters 8 ist mit einem zugehörigen ständerseitigen Anschluss U, V und W der Antriebsmaschine 10 elektrisch leitend verbunden. Der Rotor dieser Antriebsmaschine 10 ist mechanisch mit dem Antriebsrad 12 bzw. der Antriebsachse 12 des batteriebetriebenen Fahrzeugs verbunden. Zur Steuerung der abschaltbaren Leistungshalbleiter T1,...,T6 des IGBT-Pulsstromrichters 8 und der abschaltbaren Leistungshalbleiter T8 und T10 des bidirektionalen Gleichspannungs-Wandlers 6 ist eine Steuer- und Regeleinrichtung 24 vorgesehen.

Aus der DE 10 2006 060 053 A1 ist ein Antriebssystem eines batteriebetriebenen Fahrzeugs bekannt, das keinen bidirektionalen Gleichspannungs-Wandler 6 aufweist. Bei diesem Antriebssystem sind der Energiespeicher 4 und der Pufferkondensator 18 elektrisch parallel zu den gleichspannungsseitigen Anschlüssen DC+ und DC- des selbstgeführten Stromrichters 8 geschaltet. Ansonsten besteht kein weiterer Unterschied zum Antriebssystem 2 der DE 10 2009 044 281 A1.

Aus der US 6 975 085 B1 ist eine elektronische Motorbremse bekannt, welche einen Bremsschaltkreis mit ein oder mehreren elektrischen Entladungseinrichtungen an einer oder an mehreren Versorgungsleitungen einer Stromversorgung zum Antreiben eines elektronisch kommutierten Gleichstrommotors aufweist. Diese elektronische Motorbremse beinhaltet eine Aktivierungsschaltung, welche im Bremsfall die elektronischen Schalter des Bremsschaltkreises ansteuert und somit die darin enthaltenen Entladungseinrichtungen zum Bremsen des Motors aktiviert. Eine spezifische Ausführungsform der Entladungseinrichtung im Bremsschaltkreis der elektronischen Motorbremse ist der Kurzschluss der Versorgungsleitungen, also der ständerseitigen Anschlüsse des elektronisch kommutierten Gleichstrommotors, mittels der in Sternschaltung angeordneten und einen Sternpunkt bildenden elektronischen Schalter.

Aus der DE 10 2008 045 247 A1 ist eine Vorrichtung zum Umwandeln von Elektroenergie in Wärme im Bereich der Antriebs- und/oder Hochspannungstechnik mit einem Bremswiderstand und wenigstens einem ansteuerbaren Bremsleistungshalbleiter zum Steuern der Umwandlung bekannt, die im Bedarfsfall eine schnelle und kostengünstige Überführung von Wirkleistung in Wärme ermöglicht. Der Bremswiderstand weist dafür mehrere Einzelbremswiderstände, welche jeweils Teil eines bipolaren Submoduls sind. Diese Submodule werden unter Ausbildung einer Submodulreihenschaltung in Reihe geschaltet und weisen zumindest teilweise einen Energiespeicher in Parallelschaltung zu jeweils einem zugeordneten Einzelbremswiderstand und einen steuerbaren Bremsleistungshalbleiter auf. Der Bremsleistungshalbleiter ermöglicht in der Bremsstellung den Stromfluss mittels des jeweils zugeordneten Einzelbremswiderstands und unterbricht diesen in der Normalbetriebsstellung.

Aus der EP 2 338 752 A1 ist ein elektrisches Fahrzeug bekannt, dessen elektrischer Antrieb ein Antriebsrad, welches von einem elektrischen Traktionsmotor angetrieben wird, eine Bremsbefehlsvorrichtung, die von einem Fahrer betätigt wird und eine Bremslöseeinheit aufweist. Die Bremslöseeinheit wiederum weist eine elektromagnetische Bremse auf, welcher mittels Elektrizitätszufuhr betrieben wird. Der Antrieb wird gestoppt, indem die Elektrizitätszufuhr der elektromechanischen Bremse unterbrochen wird, um die Drehung der Drehwelle des elektrischen Traktionsmotors zu blockieren. Eine weitere Möglichkeit ist, mittels einer Kurzschlussbremsvorrichtung die Versorgungsleitung des Traktionsmotors unter Verwendung von mechanischen Schaltern in einer Sternschaltung, welche an den elektrischen Phasen zwischen Inverter und Traktionsmotor angeschlossen ist, kurzzuschließen.

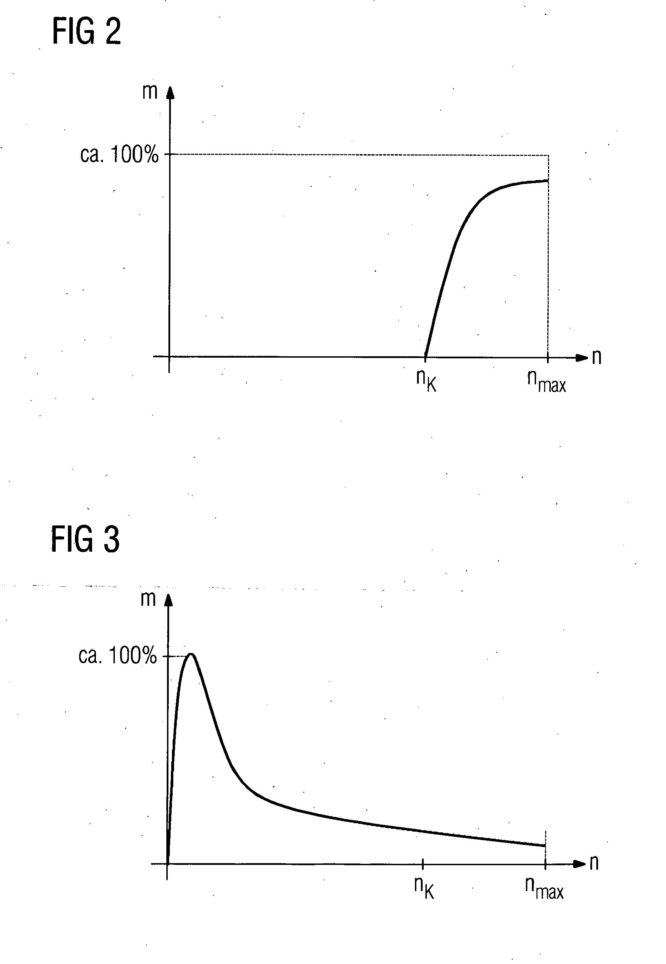

Beim Betrieb der permanent erregten Synchronmaschine 10, insbesondere im Feldschwächbetrieb, entsteht durch Ausfall des selbstgeführten Stromrichters 8 oder durch Ausfall der Steuer- und Regeleinrichtung 24 durch Energierückspeisung über die Freilaufdioden V1,..., V6 des selbstgeführten Stromrichters 8 in den Energiespeicher 4 oder in einen nicht näher dargestellten Bremswiderstand ein Bremsmoment, dessen Verlauf im Diagramm der FIG 2 näher dargestellt ist. Dieses Bremsmoment setzt beispielsweise bei maximaler Drehzahl nₘₐₓ mit maximaler Amplitude ein und nimmt mit kleiner werdender Drehzahl n ab. Dieses Bremsmoment wird Null, wenn die elektromotorische Kraft (EMK) der Antriebsmaschine 10 durch Abnahme der Drehzahl n entsprechend klein gegenüber einer an den gleichspannungsseitigen Anschlüssen DC+ und DC- des selbstgeführten Stromrichters 8 anstehenden Gleichspannung geworden ist. Neben diesem Verlauf des Bremsmoments kann zusätzlich eine Überspannung entstehen, die den selbstgeführten Stromrichter 8 oder andere an den Gleichspannungs-Stromschienen 20 und 22 angeschlossenen Vorrichtungen zerstören kann.

Bei einem batteriebetriebenen Fahrzeug ist ein derartiges Bremsmoment nicht erwünscht und wird auch nicht akzeptiert, da der Fahrzeuglenker eines derartigen batteriebetriebenen Fahrzeugs von diesem Betriebszustand völlig überrascht wird. Ein Bremsen wird ausschließlich vom Fahrzeuglenker eingeleitet und gesteuert. Ein derartig plötzlich auftretendes Bremsmoment kann außerdem dazu führen, dass das batteriebetriebene Fahrzeug ausbricht mit der Folge der Beschädigung bzw. der Zerstörung des Fahrzeugs und anderer Fahrzeuge und unter Umständen mit der Folge der Verletzung des oder der Fahrzeuglenker(s). Um im Fehlerfall des selbstgeführten Stromrichters 8 oder seiner Steuer- und Regeleinrichtung 24 des Antriebssystems 2, wobei die permanent erregte Synchronmaschine 10, insbesondere im Feldschwächbetrieb betrieben wird, Überspannungen und Bremsmomente zu beherrschen, wird der selbstgeführte Stromrichter 8 derart gesteuert, dass der Betriebszustand "Ankerkurzschluss" eintritt. Bei diesem Betriebszustand werden die oberen oder die unteren abschaltbaren Leistungshalbleiter T1, T3, T5 oder T2, T4, T6 leitend geschaltet, wodurch die Ständerwicklungen Lₐ, L_{b} und L_{c} der permanent erregten Synchronmaschine 10 kurzgeschlossen sind. Dadurch wird eine vorhandene kinetische Energie dieser Synchronmaschine 10 über die Ständerwicklung Lₐ, L_{b} und L_{c} in Wärme umgesetzt. Dadurch kann diese kinetische Energie nicht mehr in elektrische Energie umgewandelt werden, die dann zu Überspannungen führt. Mittels eines derartig gesteuerten Ankerkurzschlusses wird im Fehlerfall eine Notbremsung eingeleitet. Ein Drehmomentverlauf eines mittels eines Ankerkurzschlusses erzeugten Bremsmomentes ist im Diagramm der FIG 3 näher dargestellt. Diesem Verlauf ist zu entnehmen, dass bei maximaler Drehzahl nₘₐₓ das Bremsmoment mit minimaler Amplitude einsetzt und mit Verringerung der Drehzahl n ansteigt. Bei kleinen Drehzahlen steigt die Amplitude dieses Bremsmoment sehr schnell auf seinen maximalen Wert an und fällt danach bis zur Drehzahl n=0 sehr schnell.

Um im Fehlerfall ein hohes Bremsmoment (FIG 2) zu verringern, ist es naheliegend, einen Ankerkurzschluss zu schalten. Da im Fehlerfall des selbstgeführten Stromrichters bzw. der Steuer- und Regeleinrichtung dieses selbstgeführten Stromrichters zur Generierung eines Ankerkurzschlusses ausfällt, kann ein Ankerkurzschluss nur mittels einer externen Vorrichtung eingeleitet werden.

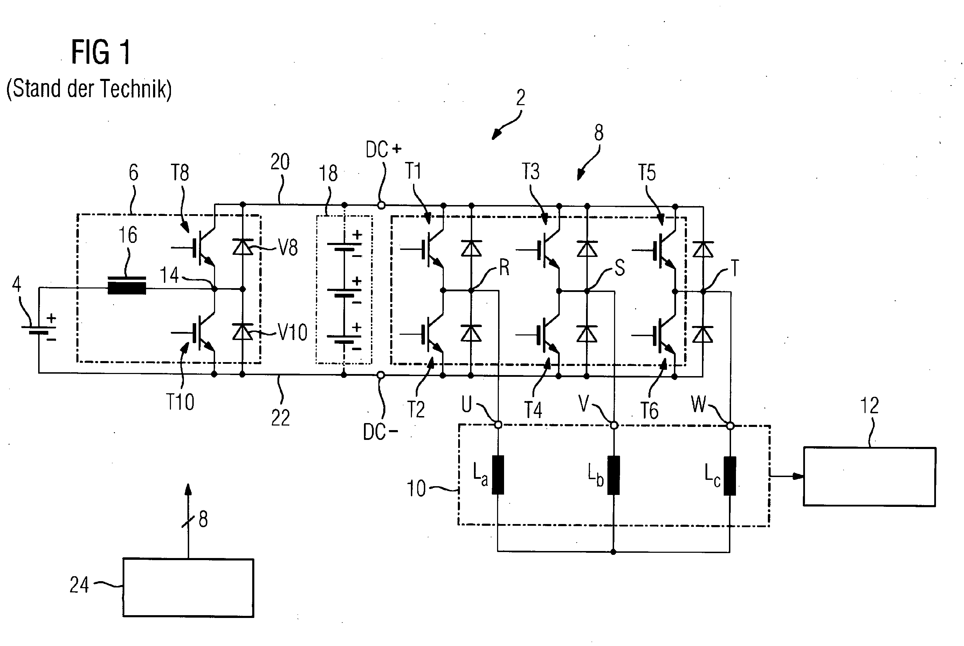

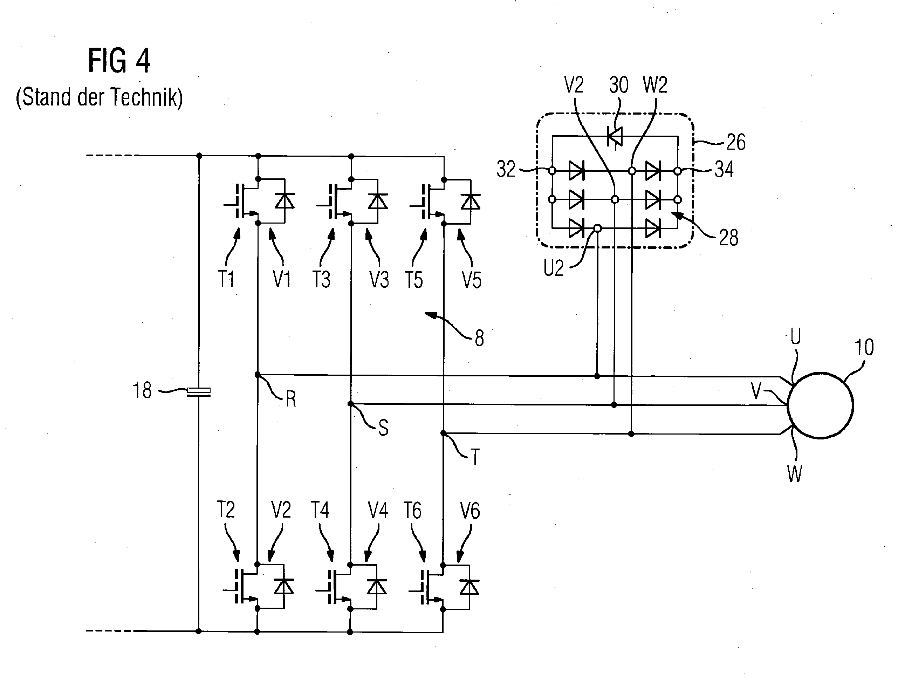

In FIG 4 ist eine Vorrichtung 26 zum Generieren eines externen Ankerkurzschlusses bei einem Antriebssystem 2 nach FIG 1 näher dargestellt, bei dem aus Gründen der Übersichtlichkeit nur der selbstgeführte Stromrichter 8, der Pufferkondensator 18 und die permanent erregte Synchronmaschine 10 dargestellt sind. Diese Vorrichtung 26 weist eine 6-pulsige Diodenbrücke 28 und einen Thyristor 30 auf. Jeweils zwei in Reihe geschaltete Dioden bilden einen wechselspannungsseitigen Anschluss U2 bzw. V2 bzw. W2. Diese drei Reihenschaltungen jeweils zweier Dioden sind elektrisch parallel geschaltet und bilden zwei gleichspannungsseitige Anschlüsse 32 und 34, zu denen der Thyristor 30 derart geschaltet ist, dass sein Kathodenanschluss mit dem Anschluss 32 und sein Anodenanschluss mit dem Anschluss 34 der 6-pulsigen Diodenbrücke 28 elektrisch leitend verbunden ist. Die wechselspannungsseitigen Anschlüsse U2, V2 und W2 der Vorrichtung 26 sind mit korrespondierenden ständerseitigen Anschlüssen U, V und W der permanent erregten Synchronmaschine 10 elektrisch leitend verbunden.

Im Fehlerfall wird der Thyristor 30 gezündet, wodurch dieser die beiden gleichspannungsseitigen Anschüsse 32 und 34 miteinander elektrisch leitend verbindet. Dadurch wird die 6-pulsige Diodenbrücke 28 gleichspannungsseitig kurzgeschlossen. Da an den wechselspannungsseitigen Anschlüssen U2, V2 und W2 der 6-pulsigen Diodenbrücke 28 die ständerseitigen Anschlüsse U, V und W der permanent erregten Synchronmaschine 10 angeschlossen sind, werden die Ständerwicklungen Lₐ, L_{b} und L_{c} dieser Synchronmaschine 10 kurzgeschlossen. Ein Thyristor 30 kann mittels einer Löschschaltung wieder ausgeschaltet werden. Ebenfalls erlischt ein gezündeter Thyristor 30, wenn er einen Wechselstrom führt, der durch Null geht (Vorzeichenwechsel). Da an den gleichspannungsseitigen Anschlüssen 32 und 34 der 6-pulsigen Diodenbrücke 28 eine Gleichspannung ansteht, erlischt der Thyristor 30 erst dann, wenn diese Gleichspannung Null geworden ist. Somit generiert diese Vorrichtung 26 einen Bremsmomentenverlauf wie der Verlauf der im Diagramm der FIG 3.

Wird kein Ankerkurzschluss extern geschaltet, so ist das Bremsmoment gemäß dem Diagramm der FIG 2 bei einer Drehzahl n_{K} wieder Null. Das heißt, bei Drehzahlen n, die kleiner der Drehzahl n_{K} sind, ist kein Bremsmoment mehr wirksam. Bei dem Verlauf des Bremsmoments gemäß dem Diagramm der FIG 3 ist dieses noch wirksam, wobei sein maximaler Wert erst bei sehr kleinen Drehzahlen erreicht wird. Dadurch wird wieder ein batteriebetriebenes Fahrzeug ohne Zutun des Fahrzeuglenkers annähernd bis zum Stillstand abgebremst, wobei bei einer kleinen Geschwindigkeit sehr stark gebremst wird. Ein derartiges Verhalten ist von nachfolgenden Fahrzeugen schwer einschätzbar, erst recht, wenn diese Situation nicht verkehrsbedingt verursacht worden ist.

Somit ist es wünschenswert, bei Drehzahlen n ≤ nₖ den externen Ankerkurzschluss wieder aufzuheben. Dies ist aber mit der Vorrichtung 26 nicht möglich, da ohne eine zusätzliche Löschschaltung für den Thyristor 30 dieser nicht zu einem vorbestimmten Zeitpunkt ausgeschaltet werden kann. Eine derartige Löschschaltung würde die Vorrichtung 26 aufwändiger machen und diese würde durch zusätzliche Verlustleistungen zu der Diodenbrücke 28 unwirtschaftlich.

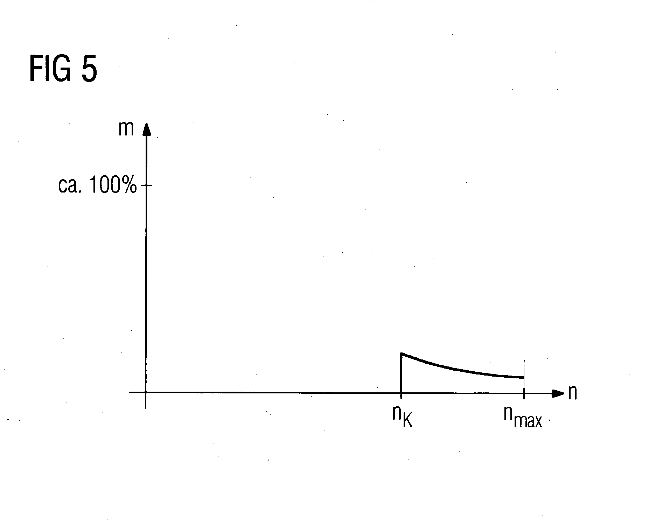

Ein Verlauf eines gewünschten Bremsmoments ist in dem Diagramm der FIG 5 näher dargestellt. Dieser Verlauf würde sich einstellen, wenn der externe Ankerkurzschluss bei Drehzahlen n ≤ nₖ wieder aufgehoben werden könnte.

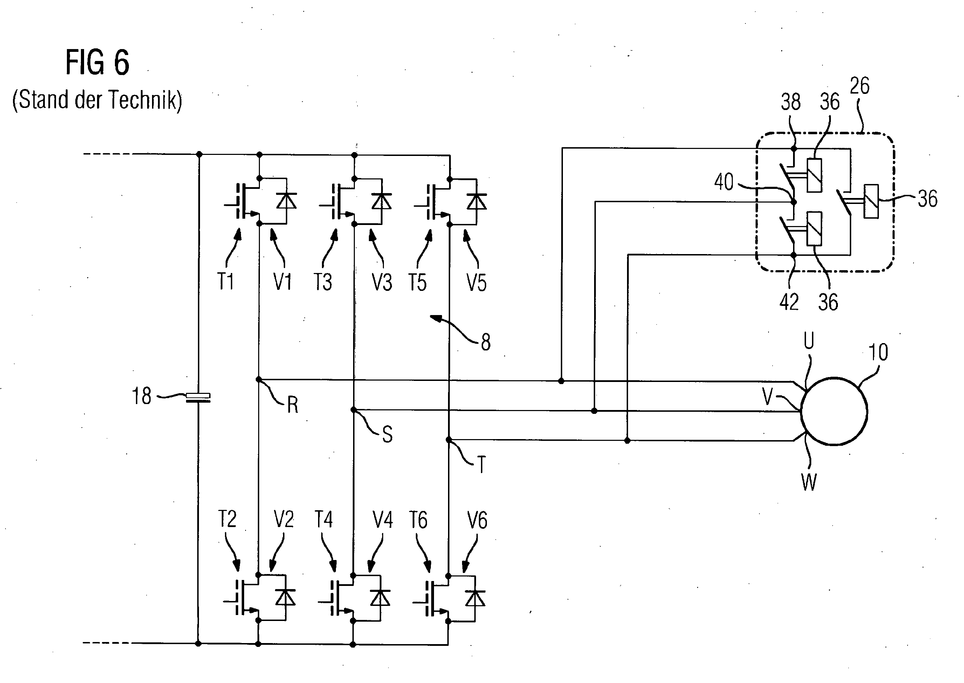

In FIG 6 ist eine weitere Ausführungsform der Vorrichtung 26 dargestellt, die aus der EP 0 742 637 A1 bekannt ist. Bei dieser bekannten Ausführungsform der Vorrichtung 26 sind drei Schütze 36 vorgesehen, die elektrisch in Dreieck geschaltet sind. Jeweils ein Verbindungspunkt 38,40 und 42 zweier Schütze 36 ist mit einem ständerseitigen Anschluss U bzw. V bzw. W der permanent erregten Synchronmaschine 10 elektrisch leitend verbunden. Mittels dieser Schütze kann zu jedem beliebigen Zeitpunkt ein Ankerkurzschluss eingeschaltet und wieder aufgehoben werden. Selbst wenn ein Schütz 36 dieser Vorrichtung 26 ausfallen sollte, ist diese Vorrichtung 26 weiterhin in der Lage, einen externen Ankerkurzschluss zu initiieren. Durch eine begrenzte Anzahl zulässiger Schaltspiele unter Last ist die Ausführungsform der Vorrichtung 26 bei einem Antriebssystem 2 eines batteriebetriebenen Fahrzeugs nicht verwendbar. Außerdem beanspruchen elektromechanische Bauelemente einen größeren Einbauplatz als elektronische Bauelemente und ferner sind elektromechanische Bauelemente bei einem batteriebetriebenen Fahrzeug nicht mehr zeitgemäß. Mit dieser Ausführungsform der Vorrichtung 26 ist der Verlauf eines Bremsmoments gemäß FIG 5 generierbar.

Der Erfindung liegt nun die Aufgabe zugrunde, die bekannte Vorrichtung zum gesteuerten Kurzschließen ständerseitiger Anschlüsse einer permanent erregten Synchronmaschine derart weiterzubilden, dass keine elektromechanischen Bauelemente mehr verwendet werden müssen.

Diese Aufgabe wird durch ein Antriebssystem mit den im Anspruch 1 angegebenen Merkmalen gelöst.

Durch die Verwendung von drei abschaltbaren Leistungshalbleitern, die elektrisch in Stern geschaltet sind, wobei deren freien Anschlüsse jeweils mit einem ständerseitigen Anschluss der permanent erregten Synchronmaschine und dessen Sternpunkt mittels eines hochohmigen Widerstandes mit einem gleichspannungsseitigen Anschluss des selbstgeführten Stromrichters verbunden sind, erhält man eine während des Betriebs des Antriebssystems testbare Ausführungsform der Vorrichtung zum gesteuerten Kurzschließen ständerseitiger Anschlüsse einer permanent erregten Synchronmaschine. Durch die hochohmige Anbindung des Sternpunkts der drei elektrisch in Stern geschalteten abschaltbaren Leistungshalbleiterschalter an einem gleichspannungsseitigen Anschluss des selbstgeführten Stromrichters des Antriebssytems werden die zugehörigen Inversdioden, die auch als Freilaufdioden bezeichnet werden, während des Betriebes des selbstgeführten Stromrichters dieses Antriebssystems nicht beansprucht, so dass diese nicht verschleißen.

Bei einer vorteilhaften Ausgestaltung der Vorrichtung zum gesteuerten Kurzschließen ständerseitiger Anschlüsse einer permanent erregten Synchronmaschine wird als Vorrichtung zum gesteuerten Kurzschließen ständerseitiger Anschlüsse einer permanent erregten Synchronmaschine ein IGBT-Sixpack-Modul verwendet. Durch die Verwendung eines derartigen im Handel erhältlichen IGBT-Sixpack-Moduls vereinfacht sich die Verschaltung dieser Vorrichtung mit den wechselspannungsseitigen Anschlüssen des selbstgeführten Stromrichters und mit derseitigen Anschlüssen der permanent erregten Synchronmaschine erheblich..

Zur weiteren Erläuterung der Erfindung wird auf die Zeichnung Bezug genommen, in der mehrere Ausführungsformen der Vorrichtung zum gesteuerten Kurzschließen ständerseitiger Anschlüsse einer permanent erregten Synchronmaschine eines Antriebssystems eines batteriebetriebenen Fahrzeugs nach der Erfindung schematisch veranschaulicht sind.
- FIG 1: zeigt ein Blockschaltbild eines bekannten Antriebssystems eines batteriebetriebenen Fahrzeugs, in der
- FIG 2: ist in einem Diagramm der Verlauf eines Bremsmomentes bei Ausfall eines selbstgeführten Stromrichters bzw. dessen Steuer- und Regeleinrichtung eines Antriebssystems nach FIG 1 veranschaulicht, in der
- FIG 3: ist in einem Diagramm der Verlauf eines Bremsmomentes bei einem geschalteten Ankerkurzschluss des selbstgeführten Stromrichters des Antriebssystems nach FIG 1 dargestellt, die
- FIG 4: zeigt ein Blockschaltbild des Antriebssystems nach FIG 1 mit einer Vorrichtung zum externen Schalten eines Ankerkurzschlusses, in der
- FIG 5: ist in einem Diagramm der Verlauf eines gewünschten Bremsmomentes im Fehlerfall des selbstgeführten Stromrichters bzw. dessen Steuer- und Regeleinrichtung des Antriebssystems nach FIG 1 veranschaulicht, die
- FIG 6: zeigt ein Blockschaltbild des Antriebssystems nach FIG 1 mit einer weiteren bekannten Ausführungsform einer Vorrichtung zum externen Schalten eines Ankerkurzschlusses, in den
- FIG 7 und 8: ist jeweils eine erfindungsgemäße Ausführungsform einer Vorrichtung zum externen Schalten eines Ankerkurzschlusses gemäß FIG 1 dargestellt, und in der
- FIG 9: ist eine vorteilhafte erfindungsgemäße Ausführungsform einer Vorrichtung zum externen Schalten eines Ankerkurzschlusses bei einem Antriebssystem nach FIG 1 dargestellt.

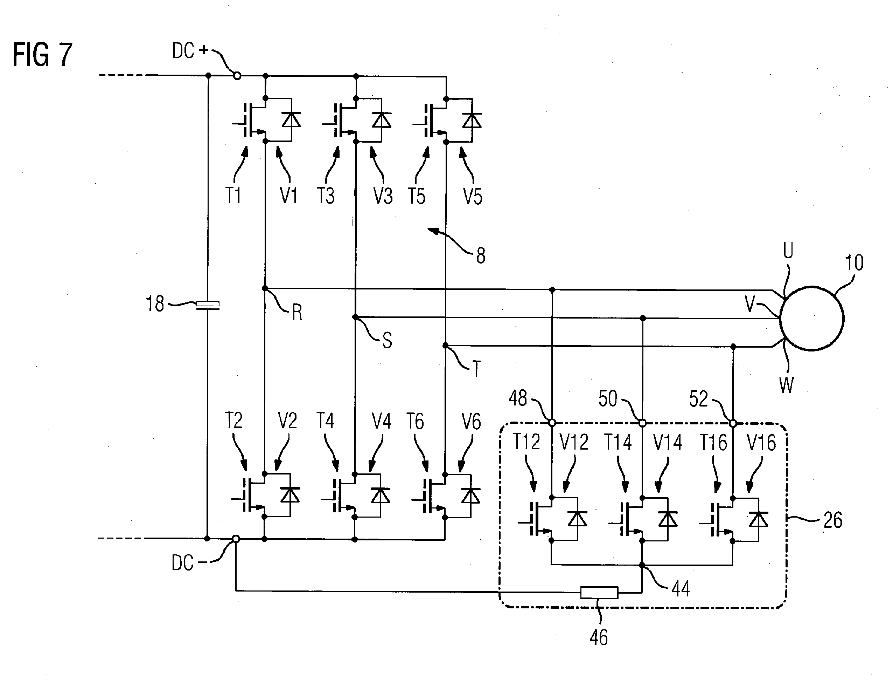

In der FIG 7 ist wegen der Übersichtlichkeit vom Antriebssystem 2 gemäß FIG 1 nur der Pufferkondensator 18, der selbstgeführte Stromrichter 8 und die permanent erregte Synchronmaschine 10 dargestellt. Außerdem zeigt dieses Blockschaltbild eine erfindungsgemäße Ausführungsform der Vorrichtung 26, mittels der ständerseitige Anschlüsse U, V und W der permanent erregten Synchronmaschine 10 für eine vorbestimmte Zeitspanne kurzgeschlossen werden können. Dazu weist diese Vorrichtung 26 drei abschaltbare Leistungshalbleiter T12, T14 und T16, insbesondere IGBTs, auf. Anstelle von IGBTs können auch MOS-Feldeffekttransistoren (MOSFET) als abschaltbare Leistungshalbleiter T12, T14, T16 der Vorrichtung 26 verwendet werden. Die abschaltbaren Leistungshalbleiter T12, T14 und T16 sind elektrisch in Stern geschaltet, deren Sternpunkt 44 mittels eines hochohmigen Widerstands 46 mit einem gleichspannungsseitigen Anschluss DC- des selbstgeführten Stromrichters 8 elektrisch leitend verbunden ist. Die freien Anschlüsse 48, 50 und 52 der abschaltbaren Leistungshalbleiter T12, T14, T16 sind elektrisch leitend mit einem ständerseitigen Anschluss U, V bzw. W der permanent erregten Synchronmaschine 10 verbunden.

Durch die hochohmige Anbindung des Sternpunkts 44 am gleichspannungsseitigen Anschluss DC- des selbstgeführten Stromrichters 8 ist die Vorrichtung 26 potentialmäßig vom selbstgeführten Stromrichter 8 entkoppelt. Außerdem ist dadurch diese Vorrichtung 26 fest mit einem Bezugspotential verbunden, so dass das Potential des Sternpunkts 44 während des Betriebes der Vorrichtung 26 sich nicht ändern kann. Ein Schweben des Potentials des Sternpunkts 44 wird somit verhindert.

Durch diese Ausführungsform der Vorrichtung 26 kann zu beliebigen Zeitpunkten die permanent erregte Synchronmaschine 10 an ihren ständerseitigen Anschlüssen U, V, W kurzgeschlossen werden. Das heißt, mittels der erfindungsgemäßen Ausführungsform der Vorrichtung 26 kann gezielt extern ein Ankerkurzschluss geschaltet bzw. wieder aufgehoben werden. Mit diesem extern geschalteten Ankerkurzschluss kann ein auftretendes Bremsmoment im Fehlerfall des selbstgeführten Stromrichters 8 bzw. dessen Steuer- und Regeleinrichtung 24 während des Betriebs des Antriebssystems eines batteriebetriebenen Fahrzeugs, insbesondere im Feldschwächbetrieb, minimiert werden, damit das batteriebetriebene Fahrzeug spurstabil bleibt und der Fahrzeuglenker von der plötzlichen Reaktion (Bremsmoment) eines fehlerhaften Stromrichters 8 bzw. Steuer- und Regeleinrichtung 24 nicht überrascht wird.

Durch die hochohmige Anbindung des Sternpunktes 44 der Vorrichtung 26 an den gleichspannungsseitigen Anschluss DC- des selbstgeführten Stromrichters 8 besteht die Möglichkeit, die abschaltbaren Leistungshalbleiter T12, T14, T16 jederzeit auf Funktionstüchtigkeit zu prüfen. Dazu wird jeder abschaltbare Leistungshalbleiter T12, T14, T16 nacheinander derart angesteuert, dass dieser sicher einschaltet. Dadurch wird ein wechselspannungsseitiger Anschluss R, S bzw. T des selbstgeführten Stromrichters 8 mittels des hochohmigen Widerstandes 46 mit seinem gleichspannungsseitigen Anschluss DC- (Bezugspotential) elektrisch leitend verbunden. Dadurch fließt ein Strom über den hochohmigen Widerstand 46, der einen Spannungsabfall an diesem Widerstand 46 generiert. Sobald eine von drei dieser so genannten Testspannungen nicht mehr ermittelt werden kann, ist ein abschaltbarer Leistungshalbleiter T12 bzw. T14 bzw. T16 nicht mehr funktionstüchtig. In einem solchen Fall kann mittels der Vorrichtung 26 ein Ankerkurzschluss nicht mehr extern geschaltet werden, so dass ein im Fehlerfall auftretendes Bremsmoment gemäß dem Diagramm der FIG 2 nicht mehr wunschgemäß minimiert werden kann. Dadurch treten die eingangs genannten Folgen auf.

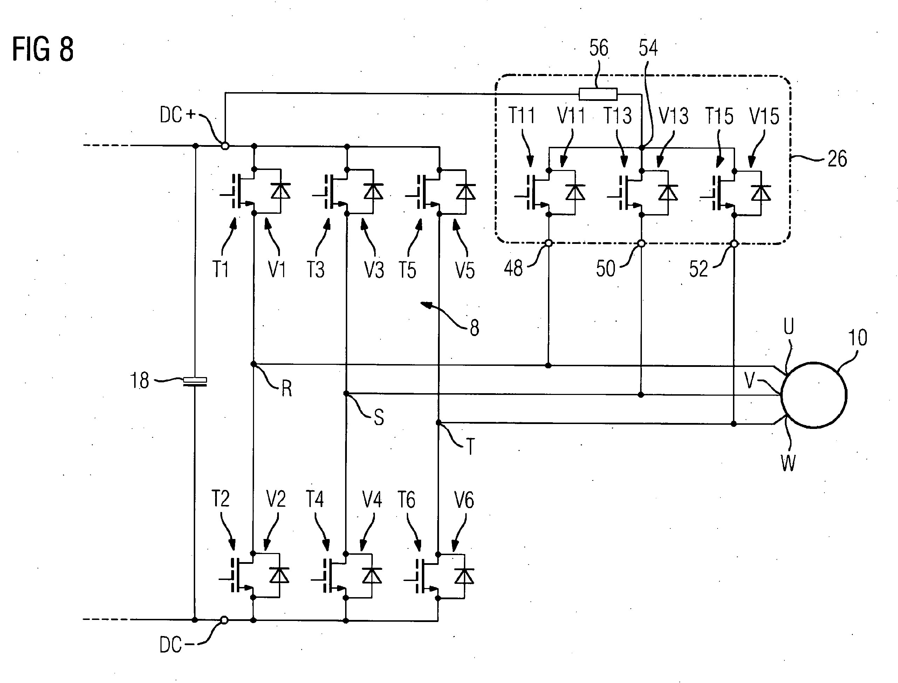

In der FIG 8 ist eine alternative erfindungsgemäße Ausführungsform der Vorrichtung 26 dargestellt. Diese alternative Ausführungsform unterscheidet sich von der Ausführungsform der Vorrichtung 26 der FIG 7 dadurch, dass der Sternpunkt 54 dreier in Stern geschalteter abschaltbarer Leistungshalbleiter T11, T13 und T15 nun mittels des hochohmigen Widerstands 56 mit dem gleichspannungsseitigen Anschluss DC+ des selbstgeführten Stromrichters 8 elektrisch leitend verbunden ist. Diese Variante der Ausführungsform der Vorrichtung 26 ist funktionsmäßig identisch mit der Ausführungsform der Vorrichtung 26 gemäß FIG 7.

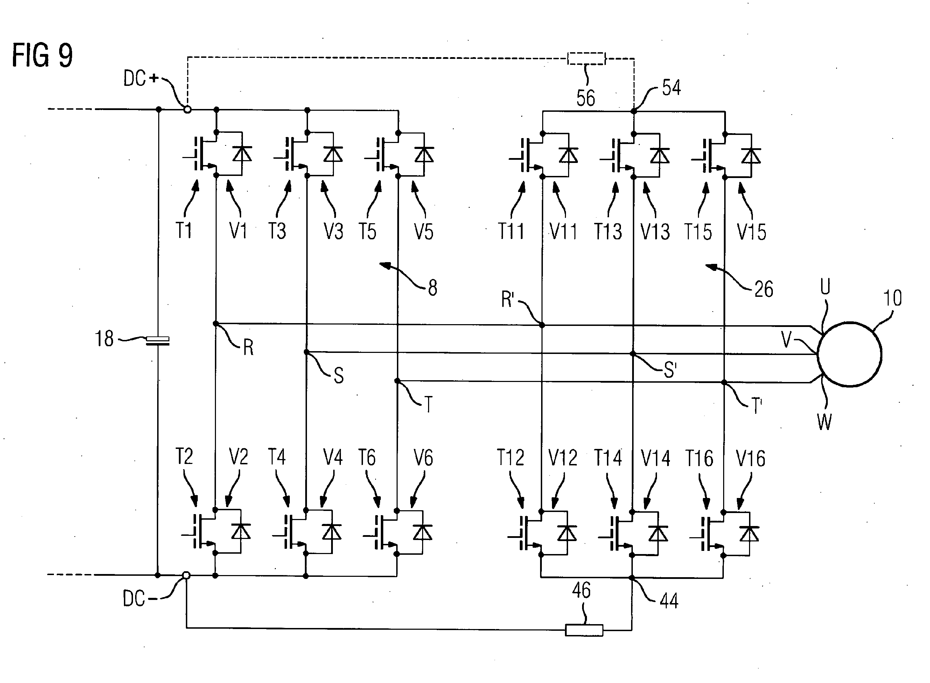

In der FIG 9 ist eine vorteilhafte erfindungsgemäße Ausführungsform der Vorrichtung 26 dargestellt. Diese Ausführungsform vereint die beiden Ausführungsformen der Vorrichtung 26 gemäß der FIG 7 und 8. Diese Ausführungsform der Vorrichtung 26 ist deshalb besonders vorteilhaft, weil als abschaltbare Leistungshalbleiter T11, T13, T15 und T12, T14, T16 ein Sixpack-Modul, insbesondere ein IGBT-Sixpack-Modul, eingesetzt wird. Durch die Verwendung eines derartigen Moduls vereinfacht sich der Aufbau ganz wesentlich. Es müssen nur die wechselspannungsseitigen Ausgänge R', S' und T' jeweils mit einem zugehörigen wechselspannungsseitigen Anschluss R, S oder T des selbstgeführten Stromrichters 8 und mit einem ständerseitigen Anschluss U, V oder W der permanent erregten Synchronmaschine 10 elektrisch leitend verbunden werden. Einer der beiden gleichspannungsseitigen Anschlüsse des IGBT-Sixpack-Moduls, die jeweils mit einem Sternpunkt 44 bzw. 54 der unteren bzw. oberen abschaltbaren Leistungshalbleiter T12, T14, T16 bzw. T11, T13, T15 elektrisch leitend verbunden sind, wobei mittels des hochohmigen Widerstands 46 bzw. 56 am Potential des gleichspannungsseitigen Anschlusses DC- bzw. DC+ des selbstgeführten Stromrichters 8 angebunden. Diese Ausführungsform wird dadurch weiter verbessert, dass auch der andere der beiden gleichspannungsseitigen Anschlüsse des IGBT-Sixpack-Moduls mittels eines weiteren hochohmigen Widerstands 56 am Potential des gleichspannungsseitigen Anschlusses DC+ des selbstgeführten Stromrichters 8 angebunden ist. Diese Möglichkeit ist mittels einer unterbrochenen Linie im Blockschaltbild der FIG 9 eingezeichnet. Die zwischen den Sternpunkten 44 und 54 auftretende Spannung kann zur Energieversorgung der Ansteuerungen der abschaltbaren Leistungshalbleiter T11, T13, T15, T12, T14, T16 des IGBT-Sixpack-Moduls ausgekoppelt werden.

Dadurch, dass die Vorrichtung 26 zum externen Schalten eines Ankerkurzschlusses erfindungsgemäß ausgestaltet ist, kann ein im Fehlerfall auftretendes Bremsmoment gemäß dem Verlauf im Diagramm der FIG 2 in den gewünschten Verlauf gemäß Diagramm der FIG 5 abgeändert werden. Dadurch wird der Fahrzeuglenker eines batteriebetriebenen Fahrzeugs mit einer permanent erregten Synchronmaschine 10 nicht mehr vom plötzlich auftretenden eines maximalen Bremsmoments, der infolge eines Fehlers im selbstgeführten Stromrichter 8 bzw. dessen Steuer- und Regeleinrichtung 24 auftritt, überrascht. Dadurch bleibt das batteriebetriebene Fahrzeug im Fehlerfall spurstabil, so dass auch nachfolgende Fahrzeuglenker nicht durch ein ausbrechendes und/oder stark abbremsendes Fahrzeug überrascht werden.

## Patentansprüche

1. Antriebssystem (2) eines batteriebetriebenen Fahrzeugs mit einer permanent erregten Synchronmaschine (10), deren ständerseitige Anschlüsse (U,V,W) mit wechselspannungsseitigen Anschlüssen (R,S,T) eines selbstgeführten Stromrichters (8) elektrisch leitend verbunden sind, und mit einer Vorrichtung (26) zum gesteuerten Kurzschließen der ständerseitigen Anschlüsse (U,V,W) der permanent erregten Synchronmaschine (10), wobei diese Vorrichtung (26) drei abschaltbare Leistungshalbleiter (T12,T14,T16;T11,T13,T15) aufweist, die elektrisch in Stern geschaltet sind, die freien Anschlüsse (48,50,52) dieser abschaltbaren Leistungshalbleiter (T11,T13, T15;T12,T14,T16) jeweils mit einem ständerseitigen Anschluss (U,V,W) der permanent erregten Synchronmaschine (10) elektrisch leitend verbunden sind und der Sternpunkt (44,54) dieser Sternschaltung mittels eines hochohmigen Widerstands (46,56) mit einem gleichspannungsseitigen Anschluss (DC-, DC+) des selbstgeführten Stromrichters (8) elektrisch leitend verbunden ist.

2. Antriebssystem (2) nach Anspruch 1,
**dadurch gekennzeichnet, dass** als abschaltbare Leistungshalbleiter (T11,T13,T15;T12,T14,T16) jeweils jeweils ein Insulated-Gate-Bipolar-Transistor vorgesehen ist..

3. Antriebssystem (2) nach Anspruch 1,
**dadurch gekennzeichnet, dass** als abschaltbare Leistungshalbleiter (T11,T13,T15;T12,T14,T16) jeweils ein MOS-Feldeffekttransistor vorgesehen ist.

4. Antriebssystem (2) nach Anspruch 1 mit sechs abschaltbaren Leistungshalbleitern (T11,T13,T15;T12,T14,T16),
**dadurch gekennzeichnet, dass** als abschaltbare Leistungshalbleiter (T11,T13,T15;T12,T14,T16) ein IGBT-Sixpack-Modul vorgesehen ist.

## Claims

1. Drive system (2) of a battery-operated vehicle with a permanently-excited synchronous machine (10), the armature-side terminals (U, V, W) of which are connected electrically-conductively to alternating current-side terminals (R, S, T) of a self-commutated converter (8), and with a facility (26) for controlled short-circuiting of the armature-side terminals (U, V, W) of the permanently-excited synchronous machine (10), wherein this facility (26) has three disconnectable power semiconductors (T12, T14, T16; T11, T13, T15) which are connected electrically in a star configuration, the free terminals (48, 50, 52) of these disconnectable power semiconductors (T12, T14, T16; T11, T13, T15) are each connected electrically-conductively to an armature-side terminal (U, V, W) of the permanently-excited synchronous machine (10) and the star point (44, 54) of this star circuit is connected by means of a high-resistance resistor (46, 56) electrically-conductively to a DC voltage-side terminal (DC-, DC+) of the self-commutated converter (8).

2. Drive system (2) according to claim 1,
**characterised in that** an Insulated-Gate-Bipolar-Transistor is provided as the disconnectable power semiconductor (T11, T13, T15; T12, T14, T16) in each case.

3. Drive system (2) according to claim 1,
**characterised in that** an MOS field effect transistor is provided as the disconnectable power semiconductor (T11, T13, T15; T12, T14, T16) in each case.

4. Drive system (2) according to claim 1 with six disconnectable power semiconductors
(T11, T13, T15; T12, T14, T16),
**characterised in that** an IGBT sixpack module is provided as the disconnectable power semiconductor (T11, T13, T15; T12, T14, T16).

## Revendications

1. Système ( 2 ) de traction d'un véhicule fonctionnant sur batterie, comprenant un moteur ( 10 ) synchrone à excitation permanente, dont les bornes ( U , V , W ) du côté du stator sont reliées d'une manière conductrice de l'électricité à des bornes ( R , S , T ) du côté de la tension alternative d'un convertisseur ( 8 ) à auto-commutation, et comprenant un dispositif ( 26 ) de court-circuitage commandé des bornes ( U , V , W ) du côté du stator du moteur ( 10 ) synchrone à excitation permanente, ce dispositif ( 26 ) ayant trois semi-conducteurs ( T12 , T14 , T16 ; T11 , T13 , T15 ) de puissance, pouvant être bloqués, qui sont montés électriquement en étoile, les bornes ( 48 , 50, 52 ) libres de ces semi-conducteurs ( T12 , T14 , T16 ; T11 , T13 , T15 ) de puissance, pouvant être bloqués, étant reliées électriquement d'une manière conductrice respectivement à une borne ( U , V , W ) du côté du stator du moteur ( 10 ) synchrone à excitation permanente, et le point ( 44 54 ) neutre de ce circuit en étoile est, au moyen d'une résistance ( 46 56 ) de grande valeur, relié d'une manière conductrice de l'électricité à une borne ( DC- , DC+) du côté de la tension continue du convertisseur ( 8 ) à auto-commutation.

2. Système ( 2 )de traction suivant la revendication 1, **caractérisé en ce qu'**il est prévu comme semi-conducteurs ( T11 , T13 , T15 , T12 , T14 , T16 ) de puissance, pouvant être bloqués, respectivement un transistor bipolaire à grille isolée.

3. Système ( 2 )de traction suivant la revendication 1, **caractérisé en ce qu'**il est prévu, comme semi-conducteurs ( T11 , T13 , T15 , T12 , T14 , T16 ) de puissance pouvant être bloqués, respectivement un transistor à effet de champ MOS.

4. Système ( 2 )de traction suivant la revendication 1, ayant six semi-conducteurs ( T11 , T13 , T15 , T12 , T14 , T16 ) de puissance pouvant être bloqués,
**caractérisé en ce qu'**il est prévu, comme semi-conducteurs ( T11 , T13 , T15 , T12 , T14 , T16 ) de puissance pouvant être bloqués, un module sixpack-IGBT.
